# EUROPEAN PATENT SPECIFICATION

(11) **EP 2 278 801 B1**
(45) Date of publication and mention of the grant of the patent: **03.06.2015**
(21) Application number: 10169421.4
(22) Date of filing: 13.07.2010
(51) Int. Cl.: H04N 7/24, H04N 7/173, H04N 21/414, H04N 21/431, H04N 21/488, H04N 21/462, H04N 21/81, H04N 21/8405

(54) **Method for displaying broadcasting contents in mobile terminal and mobile terminal thereof**
Verfahren zum Anzeigen von Rundfunkinhalten in mobilen Endgeräten und ein entprechendes mobiles Endgerät
Procédé d'affichage de contenu de diffusion dans un terminal mobile et terminal mobile correspondant

(30) Priority: 14.07.2009 KR 20090063872
(43) Date of publication of application: 26.01.2011
(73) Proprietor: LG ELECTRONICS INC., Yeongdeungpo-gu Seoul 150-721 (KR)
(72) Inventor: Nam, Kihoa, Seoul 153-801 (KR); Ko, Youngseok, Seoul 153-801 (KR); You, Soolim, Seoul 153-801 (KR); Cho, Beomseok, Seoul 153-801 (KR)
(74) Representative: Cabinet Plasseraud

(56) References cited:
- EP-A2- 1 898 629
- EP-A2- 1 898 643
- WO-A2-2009/040549
- KR-A- 20010 004 143
- US-A1- 2003 217 369
- INTETERACTIVETVWEB COM: "OCAP Tutorial : The interactive TV Web", INTERNET CITATION, 14 September 2005 (2005-09-14), XP002397928, Retrieved from the Internet: URL:http://www.interactivetvweb.org/tutori al/ocap/index.shtml [retrieved on 2006-09-07]
- MATSUBARA F M ET AL: "Context driven web applications for networked DTV", CONSUMER ELECTRONICS, 2009. ICCE '09. DIGEST OF TECHNICAL PAPERS INTERNATIONAL CONFERENCE ON, IEEE, PISCATAWAY, NJ, USA, 10 January 2009 (2009-01-10), pages 1-2, XP031467132, ISBN: 978-1-4244-4701-5

## Description

### FIELD OF THE INVENTION

The present disclosure relates to a method for displaying broadcasting content in a mobile terminal capable of providing information via a widget while the broadcasting content is being displayed. Also disclosed is a mobile terminal displaying the broadcasting content and the information concurrently via the widget according to the disclosed method.

### DESCRIPTION OF THE RELATED ART

Generally, terminals can be classified into mobile/portable terminals and stationary terminals. The mobile terminals can be further classified into handheld terminals and vehicle mounted terminals according to their modes of portability.

As functions of the terminal are diversified, the terminals can be implemented as multimedia players capable of performing composite functions such as photography, capture of moving pictures, playback of music or moving picture files, game play, broadcast reception and the like. In order to support the diversified terminal functions, improvements are necessary to structural and/or software elements of the terminal.

Recently, efforts have been made to provide more broadcasting information and broadcasting-related information to viewers while displaying broadcasting contents, as digital broadcasting technologies, such as digital multimedia broadcasting (DMB), are adopted by the mobile terminal.

The document EP 1 898 629 discloses a method for controlling an autostart of a data application including determining stored setup information of a start procedure of the data application, and executing the data application according to the determined setup information. The document WO 2009/040549 discloses a receiver for a signal conforming to a digital broadcast protocol, the receiver comprising receiver hardware arranged to tune to a broadcast signal and a receiver software application comprising a plurality of software components arranged to exchange control and/or signaling information with said hardware and to process data derived from said broadcast signal and provided by said receiver hardware.

The document "OCAP Tutorial: The interactive TV Web", from the website interactivetvweb.org, 14 September 2005, introduces concepts of the OCAP specification. The document "Context driven web applications for networked DTV" Matsubara F M et Al, 10 January 2009, pages 1-2, discloses a context aware method to select Web mini applications that provide customized content and information in DTVs.

### SUMMARY OF THE INVENTION

One object of the present disclosure is to provide more broadcasting information to viewers during digital broadcast viewing.

According to an embodiment of the present invention, a method for displaying broadcasting content in a mobile terminal is defined in claim 1. According to another embodiment of the present invention, a mobile terminal is defined in claim 3.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure.

FIG. 1 is a block diagram of a mobile terminal in accordance with an embodiment of the present disclosure.

FIG. 2A is a front perspective view of a mobile terminal according to an embodiment of the present disclosure.

FIG. 2B is a rear perspective view of the mobile terminal shown in FIG. 2A.

FIG. 3 is a flowchart that describes displaying broadcasting contents in a mobile terminal according to an embodiment of the present disclosure.

FIG. 4 is a flowchart that describes displaying broadcasting contents in a mobile terminal according to another embodiment of the present disclosure.

FIG. 5 is a flowchart that describes displaying broadcasting contents in a mobile terminal according to yet another embodiment of the present disclosure.

FIG. 6 is a flowchart that describes displaying broadcasting contents in a mobile terminal according to yet another embodiment of the present disclosure.

FIG. 7 is a flowchart that describes displaying broadcasting contents in a mobile terminal according to yet another embodiment of the present disclosure.

FIG. 8 is a screen image of a mobile terminal displaying broadcasting contents according to an embodiment of the present disclosure.

FIG.9 is a screen image of a mobile terminal displaying broadcasting contents according to another embodiment of the present disclosure.

FIG.10 is a screen image of a mobile terminal displaying broadcasting contents according to yet another embodiment of the present disclosure.

FIG.11 is a screen image of a mobile terminal displaying broadcasting contents according to yet another embodiment of the present disclosure.

FIG.12 is a screen image of a mobile terminal displaying broadcasting contents according to yet another embodiment of the present disclosure.

FIG.13 is a screen image of a mobile terminal displaying broadcasting contents according to yet another embodiment of the present disclosure.

### DETAILED DESCRIPTION OF PREFERRED EMBODIMENTS

In the following detailed description, reference is made to the accompanying drawing figures which form a part hereof, and which show by way of illustration specific embodiments of the disclosure. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

The suffixes 'module', 'unit' and 'part' may be used for elements in order to facilitate the disclosure. Significant meanings or roles may not be given to the suffixes themselves and it is understood that the 'module', 'unit' and 'part' may be used together or interchangeably.

Embodiments of the present disclosure may be applicable to various types of terminals. Examples of such terminals may include mobile terminals as well as stationary terminals, such as mobile phones, user equipment, smart phones, digital television (DTV), computers, digital broadcast terminals, personal digital assistants, portable multimedia players (PMP) and/or navigators. A further description may be provided with regard to a mobile terminal, although such teachings may apply equally to other types of terminals.

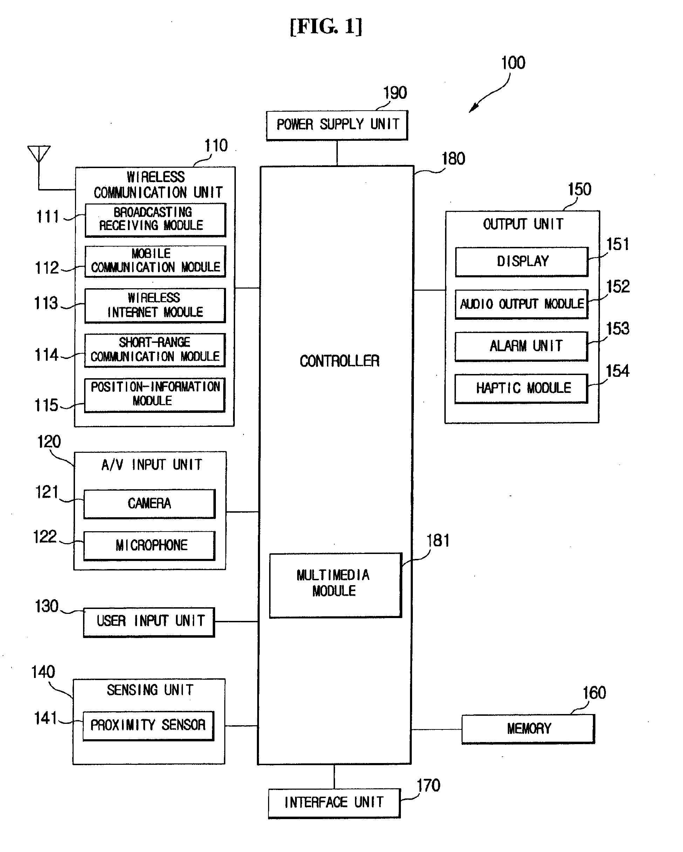

FIG. 1 is a block diagram of a mobile terminal in accordance with an embodiment of the present disclosure. Other embodiments and arrangements may also be provided to the mobile terminal 100 exemplified in FIG. 1. More or fewer components may alternatively be implemented in the mobile terminal 100.

Referring to FIG. 1, the mobile terminal 100 includes a wireless communication unit 110, an audio/video (A/V) input unit 120, a user input unit 130, a sensing unit 140, an output unit 150, a memory 160, an interface unit 170, a controller 180 and a power supply unit 190.

The wireless communication unit 110 may be configured with several components and/or modules. For example, as shown in FIG. 1, the wireless communication unit 110 may include a broadcast receiving module 111, a mobile communication module 112, a wireless Internet module 113, a short-range communication module 114 and a position-information module 115. The wireless communication unit 110 generally includes one or more components that permit wireless communication between the mobile terminal 100 and a wireless communication system or a network within which the mobile terminal 100 is located. In case of non-mobile terminals, the wireless communication unit 110 may be replaced with a wired communication unit. The wireless communication unit 110 and the wired communication unit may be commonly referred to as a communication unit.

The broadcast receiving module 111 receives a broadcast signal and/or broadcast associated information from an external broadcast managing entity via a broadcast channel. The broadcast channel may include a satellite channel and a terrestrial channel. The broadcast managing entity may refer to a system that transmits a broadcast signal and/or broadcast associated information.

At least two broadcast receiving modules 111 may be provided in the mobile terminal 100 to pursue simultaneous reception of at least two broadcast channels or facilitate broadcast channel switching. Examples of broadcast associated information received by the broadcast receiving module 111 include information associated with a broadcast channel, a broadcast program, a broadcast service provider, and the like. For example, broadcast associated information may include an electronic program a guide (EPG) of a digital multimedia broadcasting (DMB) system and an electronic service guide (ESG) of a digital video broadcast-handheld (DVB-H) system.

The broadcast signal may be a TV broadcast signal, a radio broadcast signal, and/or a data broadcast signal. The broadcast signal may further include a broadcast signal combined with a TV or radio broadcast signal.

The broadcast receiving module 111 receives broadcast signals transmitted from various types of broadcast systems. As a non-limiting example, the broadcasting systems include a digital multimedia broadcasting-terrestrial (DMB-T) system, a digital multimedia broadcasting-satellite (DMB-S) system, a digital video broadcast-handheld (DVB-H) system, a data broadcasting system known as media forward link only (MediaFLO®) and an integrated services digital broadcast-terrestrial (ISDB-T) system. Multicast signals may also be received by the broadcast receiving module 111. Data received by the broadcast receiving module 111 may be stored in the memory 160.

The mobile communication module 112 communicates wireless signals with one or more network entities such as a base station or Node-B. The signals may represent audio, video, multimedia, control signaling, data, and the like.

The wireless Internet module 113 supports Internet access for the mobile terminal 100. This wireless Internet module 113 may be internally or externally coupled to the mobile terminal 100. Suitable technologies for wireless Internet may include, but are not limited to, WLAN (Wireless LAN) (Wi-Fi), WIBRO (Wireless broadband), WIMAX (World Interoperability for Microwave Access), and/or HSDPA (High Speed Downlink Packet Access). The wireless Internet module 113 may be replaced with a wired Internet module in non-mobile terminals. The wireless Internet module 113 and the wired Internet module may be referred to as an Internet module.

The short-range communication module 114 facilitates short-range communications. Suitable technologies for short-range communication may include, but are not limited to, radio frequency identification (RFID), infrared data association (IrDA), ultra-wideband (UWB), as well as networking technologies such as Bluetooth® and ZigBeet®.

The position-information module 115 may identify or otherwise obtain a location of the mobile terminal 100. The position-information module 115 may be provided using global positioning system (GPS) components that cooperate with associated satellites, network components, and/or combinations thereof.

The audio/video (A/V) input unit 120 provides audio and/or video signal input to the mobile terminal 100. The A/V input unit 120 may include a camera 121 and a microphone 122. The camera 121 may receive and process image frames of still pictures and/or video. Two or more cameras 121 may be provided according to use environment.

The microphone 122 may receive an external audio signal while the mobile terminal 100 is in a particular mode, such as a phone call mode, a recording mode and/or a voice recognition mode. The received audio signal may then be processed and converted into audio digital data. The processed audio data may be converted to a format transmittable to a base station via the mobile communication module 112 and outputted.

The mobile terminal 100, and in particular the microphone 112, may include a noise removing algorithm or noise canceling algorithm to remove noise generated in the course of receiving the external audio signal. Data generated by the A/V input unit 120 may be stored in the memory 160, utilized by the output unit 150, and/or transmitted via one or more modules of the wireless communication unit 110. Two or more microphones 122 and/or cameras 121 may also be provided in the mobile terminal 100.

The microphone 122 functions as an audio sensor. The microphone 122 may also detect a vibration generated by a user's touch on the mobile terminal 100 in order to detect the user operation of the mobile terminal 100. The microphone 122 may be replaced by a shock sensor. The microphone 122 and the shock sensor may replace the sensing unit 140 to detect the user operation of the mobile terminal 100.

The user input unit 130 may generate input data responsive to user manipulation of an associated input device or devices. Examples of such devices include a keypad, a dome switch, a touchpad (e.g., static pressure/capacitance), a jog wheel and/or a jog switch.

The sensing unit 140 may provide status measurements of various aspects of the mobile terminal 100. For example, the sensing unit 140 may detect an open/close status of the mobile terminal 100, a relative positioning of components, such as a display and a keypad, of the mobile terminal 100, a change of position of the mobile terminal 100 or a component of the mobile terminal 100, a presence or absence of user contact with the mobile terminal 100, and/or an orientation or acceleration/deceleration of the mobile terminal 100.

The mobile terminal 100 may be configured as a slide-type mobile terminal. In such a configuration, the sensing unit 140 may sense whether a sliding portion of the mobile terminal 100 is open or closed. The sensing unit 140 may also sense presence or absence of power provided by the power supply unit 190, presence or absence of a coupling or other connection between the interface unit 170 and an external device. The sensing unit 140 may include a proximity sensor 141.

The output unit 150 may generate an output relevant to a sight sense, an auditory sense, a tactile sense and/or the like. The output unit 150 may include a display 151, an audio output module 152, an alarm unit 153, a haptic module 154 and/or the like.

The display 151 may display or output information processed by the mobile terminal 100. For example, when the mobile terminal 100 is in a call mode, the display 151 may display a user interface (UI) or a graphic user interface (GUI) associated with the call. If the mobile terminal 100 is in a video communication mode or a photograph mode, the display 151 may display a photographed and/or received picture, a UI or a GUI.

The display 151 may include at least one of a liquid crystal display (LCD), a thin film transistor liquid crystal display (TFT LCD), an organic light-emitting diode (OLED), a flexible display, and a 3-dimensional display. The display 151 may have a transparent or light-transmissive type configuration to enable an external environment to be seen through. Such a configuration may be called a transparent display. A transparent OLED (TOLED) may be an example of a transparent display. A backside structure of the display 151 may also have the light-transmissive type configuration. In this configuration, a user may see an object located behind the terminal body through the area occupied by the display 151 of the terminal body.

More than one display 151 may also be provided in the mobile terminal 100. For example, a plurality of displays 151 may be provided on a single face of the mobile terminal 100 by being built in one body or spaced apart from the single face. Alternatively, each of a plurality of displays 151 may be provided on different faces of the mobile terminal 100.

If the display 151 and a sensor for detecting a touch action (hereafter a touch sensor) are constructed in a mutual-layered structure (hereafter a touch screen), the display 151 may be used as an input device as well as an output device. For example, the touch sensor may include a touch film, a touch sheet, a touchpad and/or the like.

The touch sensor may convert a pressure applied to a specific portion of the display 151 or a variation of electrostatic capacity generated from a specific portion of the display 151 to an electric input signal. The touch sensor may detect a pressure of a touch as well as a position and size of the touch.

If a touch input is provided to the touch sensor, signal(s) corresponding to the touch input may be transferred to a touch controller. The touch controller may process the signal(s) and then transfer corresponding data to the controller 180. The controller 180 may recognize which portion of the display 151 is touched.

FIG. 1 shows that the proximity sensor 141 can be provided within the mobile terminal 100 enclosed by the touch-screen or around the touch screen. The proximity sensor 141 may detect a presence or absence of an object approaching a prescribed detecting surface or an object existing around the proximity sensor 141 using an electromagnetic field strength or infrared ray without mechanical contact. The proximity sensor 141 may have a longer durability than the contact type sensor and may also have a greater usage than the contact type sensor.

For example, the proximity sensor 141 may be one of a transmissive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and the like. If the touch screen is an electrostatic type, the proximity sensor 141 may detect proximity of a pointer using a variation of an electric field according to the proximity of the pointer. In this case, the touch screen (touch sensor) may be classified into the proximity sensor.

An action in which a pointer approaches the touch screen without contacting the touch screen may be called a proximity touch. An action in which a pointer actually touches the touch screen may be called a contact touch. The location of the touch screen proximity-touched by the pointer may be the position of the pointer that vertically opposes the touch screen when the pointer performs the proximity touch.

The proximity sensor 141 may detect a proximity touch and/or a proximity touch pattern, for example, a proximity touch distance, a proximity touch duration, a proximity touch position, a proximity touch shift state, and the like. Information corresponding to the detected proximity touch action and/or the detected proximity touch pattern may be outputted to the touch screen.

The audio output module 152 outputs audio data that is received from the wireless communication unit 110 in a call signal reception mode, a call mode or a recording mode, a voice recognition mode, a broadcast receiving mode and/or the like. The audio output module 152 may output audio data stored in the memory 160. The audio output module 152 may output an audio signal relevant to a function, such as a call signal receiving sound, a message receiving sound, and the like, performed by the mobile terminal 100. The audio output module 152 may include a receiver, a speaker, a buzzer and/or the like.

The alarm unit 153 outputs a signal for announcing an event occurrence of the mobile terminal 100. An event occurring in the mobile terminal 100 may include one of a call signal reception, a message reception, a key signal input, a touch input and/or the like. The alarm unit 153 may output a signal for announcing an event occurrence by way of vibration or the like as well as a video signal or an audio signal. The video signal may be outputted via the display 151. The audio signal may be outputted via the audio output module 152. The display 151 or the audio output module 152 may be classified as part of the alarm unit 153.

The haptic module 154 may bring about various haptic effects that can be sensed by a user. Vibration is a representative example for the haptic effect brought about by the haptic module 154. Strength and pattern of the vibration generated from the haptic module 154 may be controllable. For example, vibrations differing from each other may be outputted in a manner of being synthesized together or may be sequentially outputted.

The haptic module 154 may generate various haptic effects including a vibration, an effect caused by such a stimulus as a pin array vertically moving against a contacted skin surface, a jet power of air via outlet, a suction power of air via inlet, a skim on a skin surface, a contact of an electrode, an electrostatic power and the like, and/or an effect caused by hot/cold sense reproduction using an endothermic or exothermic device as well as the vibration.

The haptic module 154 may provide the haptic effect via direct contact. The haptic module 154 may enable a user to experience the haptic effect via muscular sense of a finger, an arm and/or the like. Two or more haptic modules 154 may be provided according to a configuration of the mobile terminal 100.

The memory 160 may store a program for operations of the controller 180. The memory 160 may temporarily store input/output data such as a phonebook, message, still picture, moving picture, and the like. The memory 160 may store data of vibration and sound in various patterns outputted in case of a touch input to the touch screen.

The memory 160 may include at least one of a flash memory, a hard disk, a multimedia card micro type memory, a card type memory such as SD memory, XD memory, and the like, a random access memory (RAM), a static random access memory (SRAM), a read-only memory (ROM), an electrically erasable programmable read-only memory, a programmable read-only memory, a magnetic memory, a magnetic disk, an optical disk, and/or the like. The mobile terminal 100 may operate in association with a web storage that performs a storage function of the memory 160 via the Internet.

The interface unit 170 allows passage to external devices connected to the mobile terminal 100. The interface unit 170 may receive data from an external device. The interface unit 170 may be supplied with a power and then the power may be delivered to elements within the mobile terminal 100. The interface unit 170 may enable data to be transferred to an external device from within the mobile terminal 100. The interface unit 170 may include a wired/wireless headset port, an external charger port, a wired/wireless data port, a memory card port, a port for coupling to a device having an identity module, an audio input/output (I/O) port, a video input/output (I/O) port, an earphone port and/or the like.

The identity module may be a chip or card that stores various kinds of information for authenticating use of the mobile terminal 100. The identity module may include a user identity module (UIM), a subscriber identity module (SIM), a universal subscriber identity module (USIM) and/or the like. A device provided with the above identity module (hereafter an identity device) may be manufactured in the form of a smart card. The identity device may be connected to the mobile terminal 100 via the port.

The interface unit 170 acts as a passage for supplying a power to the mobile terminal 100 from a cradle that is connected to the mobile terminal 100. The interface unit 170 may also act as a passage for delivering various command signals, which are inputted from the cradle by a user, to the mobile terminal 100. Various command signals inputted from the cradle, or the power, may work as a signal for recognizing that the mobile terminal 100 is correctly loaded in the cradle.

The controller 180 controls overall operations of the mobile terminal 100. For example, the controller 180 may perform control and processing relevant to a voice call, a data communication, a video conference and/or the like. The controller 180 may have a multimedia module 181 for multimedia playback. The multimedia module 181 may be implemented within the controller 180 or may be configured separate from the controller 180.

The controller 180 may perform pattern recognizing processing for recognizing a handwriting input performed on the touch screen as a character and/or recognizing a picture drawing input performed on the touch screen as an image.

The power supply unit 190 receives an external or internal power and then supplies the power required for operations of the respective elements under control of the controller 180.

Embodiments of the present disclosure explained in the following description may be implemented within a recording medium that can be read by a computer or a computer-like device using software, hardware or a combination thereof.

According to the hardware implementation, arrangements and embodiments may be implemented using at least one of application specific integrated circuits (ASICs), digital signal processors (DSPs), digital signal processing devices DSPDs), programmable logic devices (PLDs), field programmable gate arrays (FPGAs), processors, controllers, microcontrollers, microprocessors and electrical units for performing other functions. In some cases, embodiments may be implemented by the controller 180.

For a software implementation, arrangements and embodiments described herein may be implemented with separate software modules, such as procedures and functions, each of which may perform one or more of the functions and operations described herein. Software codes may be implemented with a software application written in any suitable programming language and may be stored in memory such as the memory 160, and may be executed by a controller or processor, such as the controller 180.

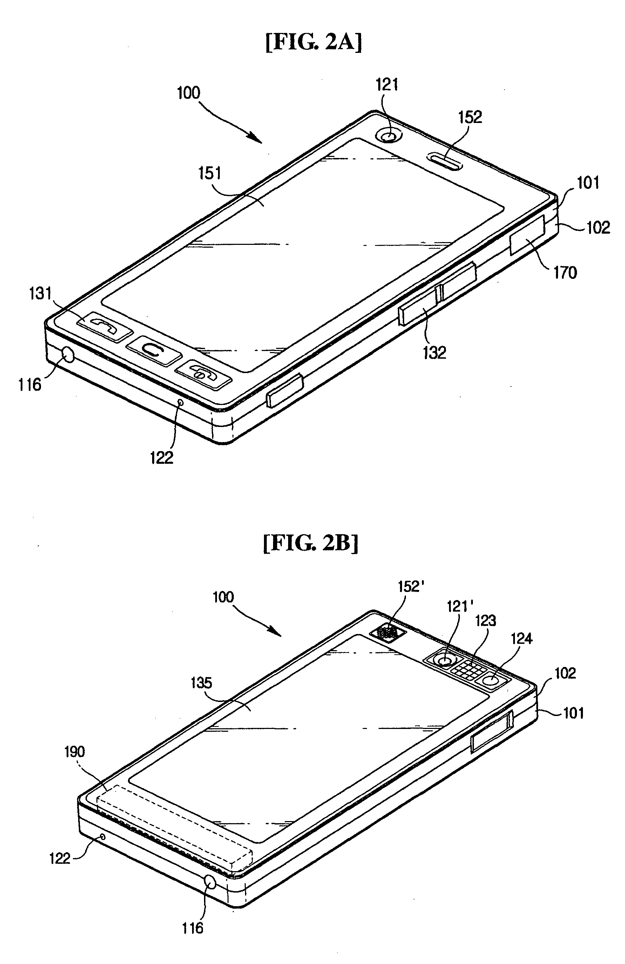

FIG. 2A is a front-view of a mobile terminal according to an embodiment of the present disclosure. Other embodiments, configurations and arrangements may also be provided.

Referring to FIG. 2A, the mobile terminal 100 may include a bar type terminal body. Embodiments of the mobile terminal may be implemented in a variety of different configurations. Examples of such configuration may include a folder-type, a slide-type, a bar-type, a rotational-type, a swing-type and/or combinations thereof.

The body may include a case, such as a casing, housing, cover, and the like, that forms an exterior of the mobile terminal 100. The case may be divided into a front case 101 and a rear case 102. Various electric/electronic parts may be provided in a space between the front case 101 and the rear case 102. A middle case may be further provided between the front case 101 and the rear case 102.

The cases may be formed by injection molding of synthetic resin or may be formed of a metal substance such as stainless steel (STS), titanium (Ti) or the like, for example.

The display 151, the audio output unit 152, the camera 121, user input units 130 including inputs 131 and 132, the microphone 122, the interface unit 170 and the like may be provided on the terminal body, and more particularly on the front case 101.

The display 151 may occupy most of a main face of the front case 101. The audio output module 152 and the camera 121 may be provided at an area adjacent to one end portion of the display 151, while the user input unit 131 and the microphone 122 may be provided at another area adjacent to the other end portion of the display 151. The user input unit 132 and the interface unit 170 may be provided on lateral sides of the front and rear cases 101 and 102.

The user input unit 130 may receive a command for controlling an operation of the mobile terminal 100. The user input unit 130 may include a plurality of manipulating units 131 and 132. The manipulating units 131 and 132 may be called a manipulating portion and may adopt any mechanism of a tactile manner that enables a user to perform a manipulation action by experiencing a tactile feeling.

Contents inputted by the first manipulating unit 131 or the second manipulating unit 132 may be diversely set For example, a command such as start, end, scroll and/or the like may be inputted to the first manipulating unit 131. A command for a volume adjustment of sound outputted from the audio output unit 152, a command for switching to a touch recognizing mode of the display 151 or the like may be inputted to the second manipulating unit 132.

FIG. 2B is a perspective diagram of a backside of the mobile terminal shown in FIG. 2A. Other embodiments, configurations and arrangements may also be provided.

Referring to FIG. 2B, a camera 121' may be additionally provided on a backside of the terminal body, and more particularly on the rear case 102. The camera 121' may have a photographing direction that is substantially opposite to a photographing direction of the camera 121 (shown in FIG. 2A) and may have pixels differing from pixels of the camera 121.

For example, the camera 121 may have a lower number of pixels to capture and transmit a picture of a user's face for a video call, while the camera 121' may have a greater number of pixels for capturing a general subject for photography without transmitting the captured subject. Each of the cameras 121 and 121' may be installed on the terminal body to be rotated and/or popped up.

A flash 123 and a mirror 124 may be additionally provided adjacent to the camera 121'. The flash 123 may project light toward a subject in case of photographing the subject using the camera 121'. If a user attempts to take a picture of the user (self-photography) using the camera 121', the mirror 124 may enable the user to view a user's face reflected by the mirror 124.

An additional audio output unit 152' may be provided on the backside of the terminal body. The additional audio output unit 152' may implement a stereo function together with the audio output unit 152 shown in FIG. 2A and may be used for implementing a speakerphone mode while talking over the terminal.

A broadcast signal receiving antenna 116 may be additionally provided at the lateral side of the terminal body as well as an antenna for communication or the like. The antenna 116 may be considered a portion of the broadcast receiving module 111 shown in FIG. 1 and may be retractably provided on the terminal body.

The power supply unit 190 for supplying a power to the mobile terminal 100 may be provided to the terminal body. The power supply unit 190 may be built within the terminal body. Alternatively, the power supply unit 190 may be detachably and attachably connected to the terminal body.

FIG. 2B also shows a touchpad 135 for detecting a touch that is additionally provided on the rear case 102. The touchpad 135 may be configured as a light transmissive type like the display 151. If the display 151 outputs visual information from both faces, the display 151 may recognize visual information via the touchpad 135 as well. The information outputted from both of the faces may be controlled by the touchpad 135. Alternatively, a display may be further provided to the touchpad 135 so that a touch screen may also be provided to the rear case 102.

The touchpad 135 may be activated by interconnecting with the display 151 of the front case 101. The touchpad 135 may be provided behind the display 151 in parallel to one another. The touchpad 135 may have a size equal to or less than a size of the display 151.

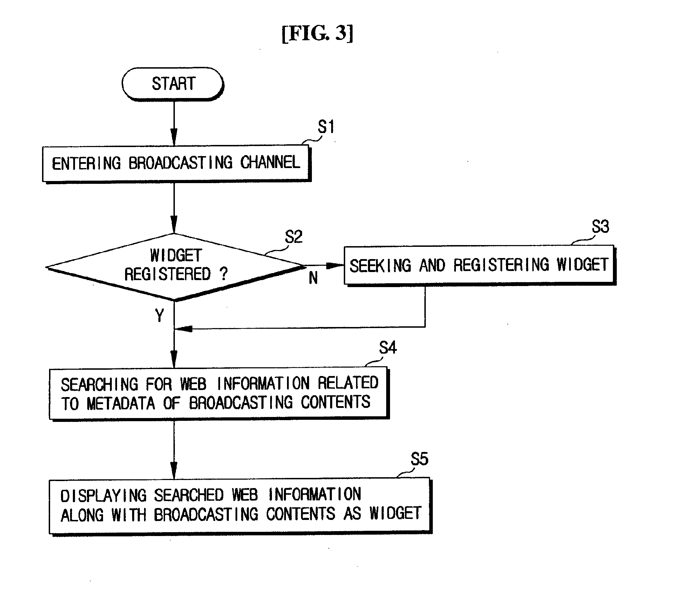

In the following description, a method for displaying broadcasting contents in a mobile terminal according to various embodiments of the present disclosure will be explained, referring to FIGS. 3-7.

In the present disclosure, a widget refers to an icon or data displayed along with the broadcasting contents and may provide various information such as weather, news and information related to the broadcasting contents. Mobile widgets are applications that can be installed on the mobile terminal 100 to add functionality to the device. Mobile widgets can easily be downloaded via the Internet or Web directly from the mobile terminal 100. Some mobile terminals 100 even come with widgets already installed and are generally customizable. Widgets can be very useful in a small mobile terminal having a challenging interface. Mobile widgets can maximize screen space use and may be especially useful in placing live data-rich applications on the device idle-screen/home-screen/phone-top. For example, mobile widgets can be highly useful web-based applications offering videos, photos, news, games, live sports scores, social networking, and location based information.

Metadata explained in the detailed description of the present disclosure is data about data, provided to contents according to a predetermined regulation for effectively searching for particular information in mass information. Examples of metadata include broadcasting channel information, broadcasting program related information (EPG included), data element descriptions, data type descriptions, attribute/property descriptions, range/domain descriptions, and process/method descriptions.

FIG. 3 is a flowchart describing a method for displaying broadcasting contents in a mobile terminal according to an embodiment of the present disclosure. Referring to FIG. 3, the controller 180 activates the broadcasting receiving module 111 of the wireless communication unit 110 in response to an input for selecting a broadcasting channel received via the user input unit 130 to select the broadcasting channel (S1) and to display the broadcasting contents provided from the broadcasting channel on the display 151. Then, the controller 180 checks whether a widget related to the broadcasting contents and broadcasting channel is registered with a widget program (S2).

Furthermore, at least part of a screen in a predetermined webpage screen set up by a user of the mobile terminal 10 may also be included in the widget. The controller 180 may display a predetermined menu screen on the display 151 in order to register a predetermined widget related to the broadcasting contents if the broadcasting widget program is not registered with the broadcasting contents (S3). At this time, a pre-stored widget may be automatically searched and registered using metadata of the broadcasting contents.

When checking for a registered widget (S2), if it is determined that a widget is registered with the broadcasting contents, the controller 180 may activate the wireless Internet module 113 of the wireless communication unit 110 or the mobile communication module 112 to connect with an external server. Furthermore, the controller 180 may use the metadata of the broadcasting contents to search for web information related to the metadata (S4). Selecting a search word for searching the web information and description of the search site will be described later. The web information obtained from the search result may be displayed on the setup widget (S5).

The widget related to the broadcasting contents may be a broadcasting program related widget, a broadcasting channel related widget, a broadcasting program type related widget, or a user setup widget. By providing such a widget, more information related to broadcasting can be provided to a user since the web information related to the broadcasting contents can be displayed along with the broadcasting contents through the preset widget program when the user watches the broadcasting contents.

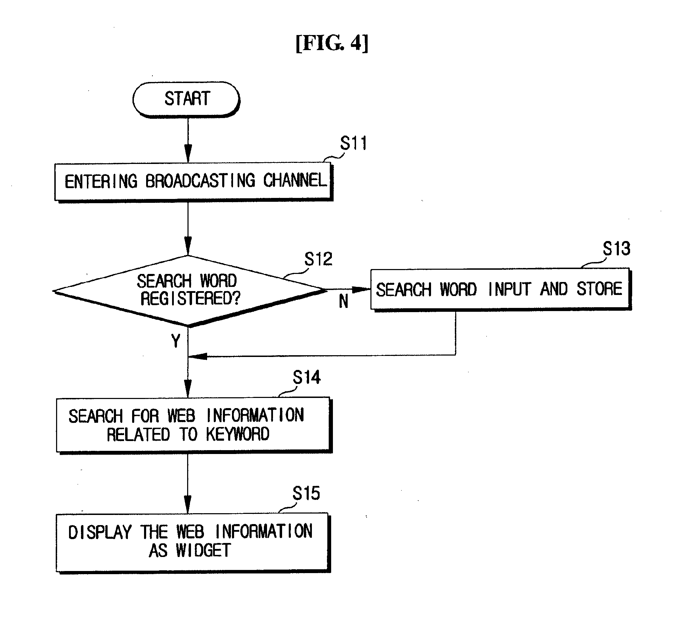

FIG. 4 is a flowchart describing a method for displaying broadcasting contents in a mobile terminal according to another embodiment of the present disclosure. Referring to FIG. 4, the controller 180 may activate the broadcasting receiving module 111 of the wireless communication unit 110 in response to an input of a broadcasting channel received via the user input unit 130 to select the broadcasting channel (S11) and to display the broadcasting contents provided from the broadcasting channel on the display 151.

Then, the controller 180 may check whether there is a search word set up for the broadcasting contents (S12). The search word is a search word related to the broadcasting contents, and may be used for a web information search which will be described later.

If the search word is not registered with the broadcasting contents, the controller 180 may display on the display 151 a predetermined menu screen for receiving an input of the search word (S13). At this time, the search word may be selected by extracting metadata of the broadcasting contents, whereby an input window into which the search word is inputted may be generated. Successively, the user may select, correct or revise the search word via the user input unit 130. Furthermore, at this time, a widget program for displaying broadcasting related information may be set up.

If it is determined that the search word for the broadcasting contents is registered at S12, the controller 180 may activate the wireless Internet module 113 of the wireless communication unit 110 or the mobile communication module 112 to connect with an external server. Then, web information related to the search word may be searched (S14). The web information obtained according to the search result may be displayed on the setup widget (S15).

As described above, by providing the preset widget program using the search word selected by the user during broadcast viewing or the search word extracted from the metadata of the broadcasting contents, more information related to the broadcasting can be provided to the user since the web information related to the broadcasting contents can be displayed along with the broadcasting contents.

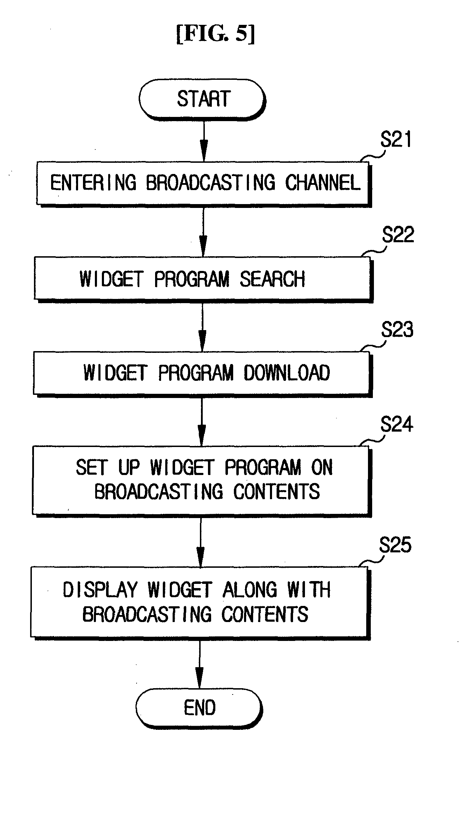

FIG. 5 is a flowchart describing a method for displaying broadcasting contents in a mobile terminal according to yet another embodiment of the present disclosure. Referring to FIG. 5, the controller 180 may activate the broadcasting receiving module 111 of the wireless communication unit 110 in response to an input for selecting a broadcasting channel received via the user input unit 130 to select the broadcasting channel (S21) and to display the broadcasting contents of the broadcasting channel on the display 151.

Then, the controller 180 may check whether a widget program set up in the broadcasting contents exists. If there is no widget program set up in the broadcasting contents, the controller 180 may activate the wireless Internet module 113 of the wireless communication unit 110 or the mobile communication module 112 to connect with an external server in order to download a widget program related to the broadcasting contents. The controller 180 may use the metadata to search for the widget program (S22), and may download the widget program according to the search result (S23).

Then, the controller 180 may set up the downloaded widget program as a widget related to the broadcasting contents (S24). Thereafter, if the user selects the broadcasting channel to receive and display the broadcasting contents on the display 151, the downloaded widget program is displayed along with the broadcasting contents or broadcasting program (S25).

According to this embodiment, the broadcasting related widget program is automatically downloaded from an external server to allow the widget to be displayed while the broadcasting contents are displayed, whereby a user can be provided with more information related with the broadcasting.

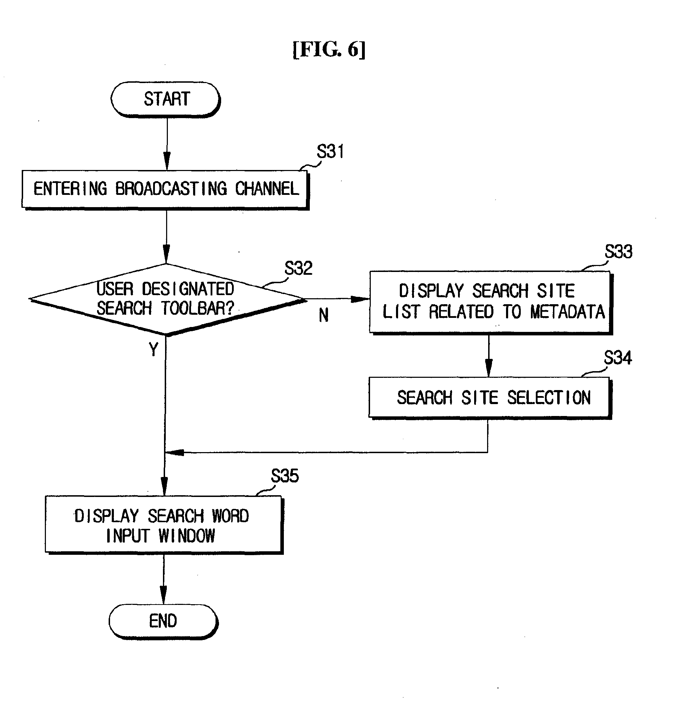

FIG. 6 is a flowchart describing a method for displaying broadcasting contents in a mobile terminal according to yet another embodiment of the present disclosure. Referring to FIG. 6, the controller 180 may activate the broadcasting receiving module 111 of the wireless communication unit 110 in response to an input for selecting a broadcasting channel received via the user input unit 130 to select the broadcasting channel (S31).

Under this circumstance, the controller 180 may check whether a search toolbar related to the broadcasting contents is registered in the mobile terminal 100 (S32). If there is no toolbar related to the broadcasting contents in the mobile terminal 100, the controller 180 may use metadata of the broadcasting contents to display a related search site list on the display 151 (S33).

Once a search site is selected from the search site list by a user, a toolbar of the selected search site is registered as a widget of the broadcasting contents (S34). Therefore, the broadcasting contents of the selected broadcasting channel and a search word input window are displayed on the display 151 at the same time (S35). The search word input window is an input window for receiving a search query to be sent to the selected search site. Upon receiving the search query in the search word input window, a search is performed and a search result received from the setup search site is displayed on the display 151 as a widget along with the broadcasting contents.

According to this embodiment, a user can obtain the desired information more accurately since the search can be executed from the search site selected by using the metadata set up by the user or the metadata of the broadcasting contents during the broadcasting.

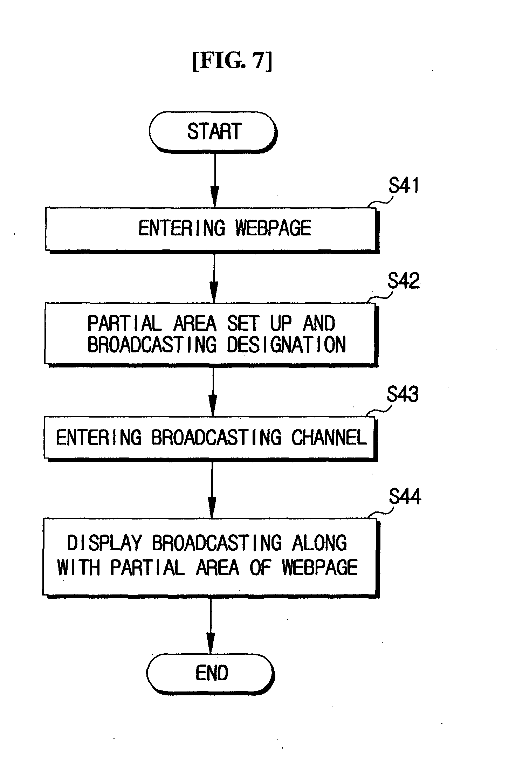

FIG. 7 is a flowchart describing a method for displaying broadcasting contents in a mobile terminal according to yet another embodiment of the present disclosure. Referring to FIG. 7, a command for opening a web page may be received via the user input unit 130 (S41). Then, the controller 180 may drive the wireless communication unit 110 to connect to an external server and display the web page on the display 151 in response to the command. At this time, the user may designate a predetermined area of the web page as a widget for the broadcasting contents (S42). The setup of the predetermined area in the web page and designation of the broadcasting contents will be described later.

When the broadcasting receiving module 111 is activated to select the broadcasting channel for displaying the designated broadcasting contents on the display 151 (S43), the wireless communication unit 110 is connected to the external server, and the designated predetermined area of the web page is displayed along with the broadcasting contents (S44). At this time, the predetermined area of the web page may be displayed as the widget in opaque overlay format. Furthermore, the display of the broadcasting contents may be stopped according to the user's option to display an entire web page on the display 151. In this case, the broadcasting contents may be automatically stored in the memory 160 whereby the user may reproduce the broadcasting contents that have not been viewed at a later time.

According to this embodiment, the user can easily check a designated partial area of the web page during the broadcasting. Therefore, the user is able to obtain more information while watching the broadcasting contents.

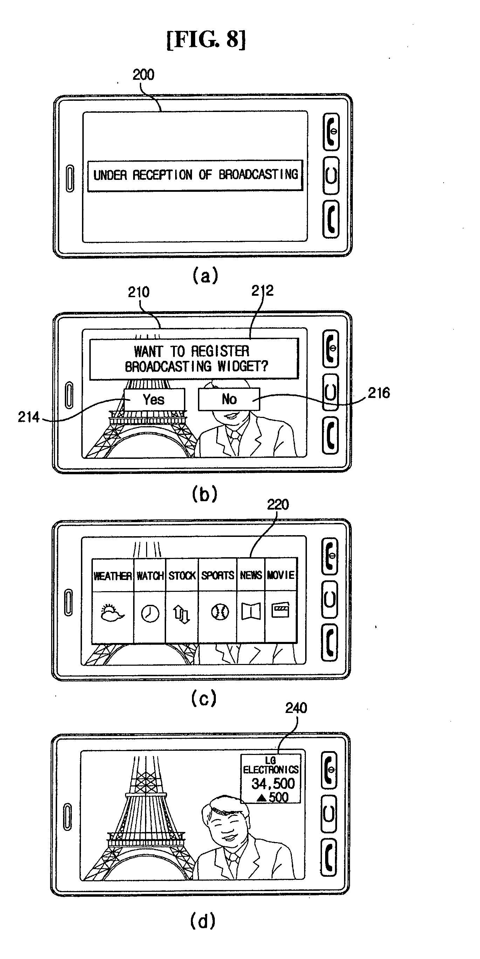

Now, various implementations in the mobile terminal 100 using the method for displaying broadcasting contents thus described will be explained in more detail with reference to FIGS. 8-13.

FIG. 8 (a) illustrates a broadcasting-receiving screen 200. When a user input for selecting a broadcasting channel is received via the user input unit 130, the controller 180 activates the broadcasting receiving module 111 to display the broadcasting contents on the display 151. At this time, the broadcasting-receiving screen 200 is displayed on the display 151 during a delay for receiving the broadcasting contents. Under this circumstance, if a broadcasting widget related to the broadcasting contents is not registered, icons 212, 214, 216 may be displayed on the display 151 in an overlay format on a broadcasting screen 210, prompting broadcasting widget registration, as illustrated in FIG. 8 (b). Reference numeral 212 is a message window prompting whether the broadcasting widget is to be registered, and the user may select a "Yes" icon 214 or a "No" icon 216.

When the "Yes" icon 214 is selected, a widget table 220 listing several widgets may be displayed on the display 151, as illustrated in FIG. 8 (c). When the "No" icon 216 is selected, the icons 212, 214, 216 may disappear from the display 151. The widget table 220 may be a table in which widgets pre-stored in the memory 160 of the mobile terminal 100 are classified and displayed, or a table in which widgets stored in a preset external server are classified and displayed.

Furthermore, the controller 180 may use the metadata of broadcasting contents when displaying the widget table 220. For example, if the currently broadcasted broadcasting channel is an economy-related channel, the widget table generated and displayed on the display 151 may include widgets related to stocks or news. At least one of the widgets displayed on the widget table 220 may be selected to be set up in the broadcasting channel or broadcasting contents.

Alternatively, the metadata of the broadcasting contents may be utilized to automatically set up a widget on the broadcasting contents. Then, as illustrated in FIG. 8 (d), a broadcasting widget 240 is displayed along with the broadcasting contents. As a result, the user can obtain more information through the broadcasting-related widget while viewing the broadcasting. For example, the user can check a stock price of a particular stock via the broadcasting widget while watching economic news.

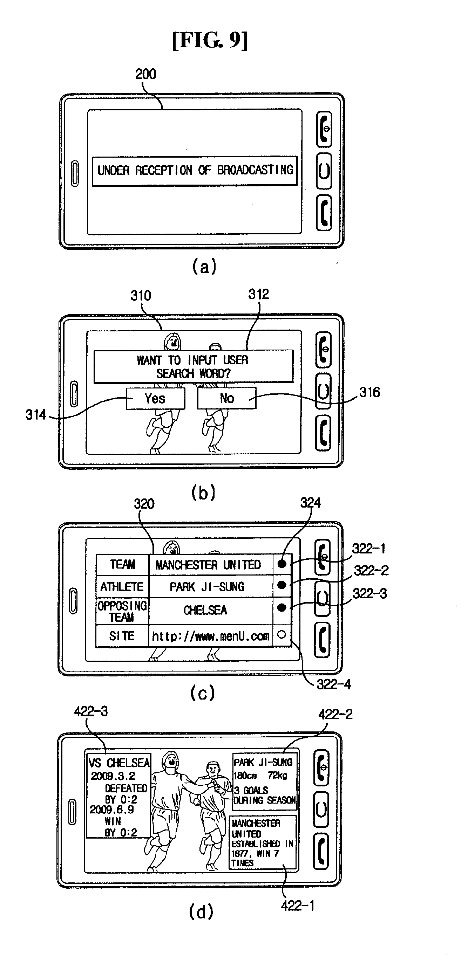

FIG. 9 (a) illustrates a broadcasting-receiving screen 200. When a user input for selecting a broadcasting channel is received via the user input unit 130, the controller 180 activates the broadcasting receiving module 111 to display the broadcasting contents on the display 151. At this time, the broadcasting-receiving screen 200 is displayed on the display 151 during a delay for receiving the broadcasting contents. Under this circumstance, if a search word for generating a broadcasting widget related to the broadcasting contents is not registered, icons 312, 314, 316 may be displayed on a broadcasting screen 310 in an overlay format on the display 151, prompting for search word registration, as illustrated in FIG. 9 (b). Reference numeral 312 is a message window prompting whether the search word is to be registered, and the user may select a "Yes" icon 314 or a "No" icon 316.

When the "Yes" icon 314 is selected, a search word table 320 may be displayed on the display 151, as illustrated in FIG. 9 (c). If the "No" icon 316 is selected, the icons 312, 314, 316 may disappear from the display 151. The search word table 320 may be generated by analyzing the metadata of broadcasting contents.

In case of DMB broadcasting, the controller 180 may extract a search word suitable for search by using electronic program guide (EPG) information. Furthermore, the search word table 320 is displayed on the display 151 by classifying the extracted search word. For example, if the currently broadcasted program is a soccer game between two teams, Manchester United and Chelsea, general information about this game, such as names of soccer teams, team members and game time and the like, may be included in the EPG, as shown in FIG. 9 (c).

The controller 180 may use the EPG information to generate the search word table 320. The search word table 320 may include a team name block 322-1, an athlete name block (322-2), an opposing team performance block 322-3, and a web site block 322-4 as shown in FIG. 9 (c). At this time, each search word may be selected or corrected by user option. Each block may include an opposing widget. The user may also select at least one search word from each block. An option column 324 for selecting the desired block may be displayed at one side of each block and the user may select at least one desired option column 324 to be selected for a desired widget.

Therefore, an input for selecting the broadcasting program or the broadcasting channel is received again, the user may use a search word selected from the search word table 320 to obtain web information from the external server, and the obtained web information may be displayed on a widget corresponding to each block of the table, as shown in FIG. 9 (d).

For example, in FIG. 9 (d), a first widget 422-1 corresponds to the team name block 322-1 shown in FIG. 9 (c), a second widget 422-2 corresponds to the athlete name block 322-2 shown in FIG. 9 (c), and a third widget 422-3 corresponds to the opposing team performance block 322-3 shown in FIG. 9 (c). Since the site block 322-4 for the web site has not been selected in FIG. 9 (c), a widget corresponding to the web site block 322-4 is not displayed on the display 151, as shown in FIG.9 (d).

According to this embodiment, web information can be obtained from an external server using a related search word and currently viewed broadcasting contents, whereby the web information is displayed as a widget to allow the user to obtain more information. Furthermore, the user can change the search word whereby the user can obtain desired information more accurately.

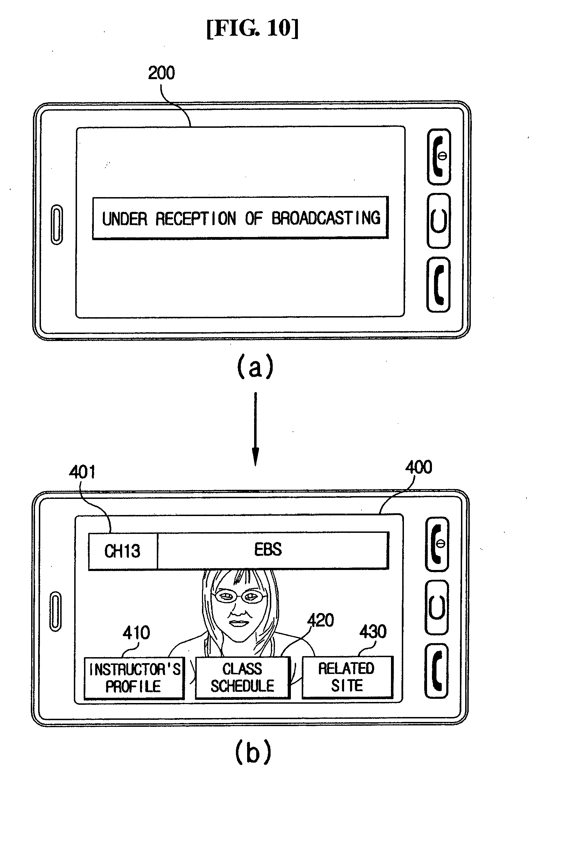

FIG. 10 (a) illustrates a broadcasting receiving screen 200. That is, when a user input for selecting a broadcasting channel is received via the user input unit 130, the controller 180 activates the broadcasting receiving module 111 to display the broadcasting contents on the display 151. At this time, the broadcasting receiving screen 200 is displayed on the display 151 during a delay for receiving the broadcasting contents. If the broadcasting is received, a broadcasting screen 400 is displayed on the display 151, as shown in FIG. 10 (b).

In the present embodiment, an education broadcasting program is used as an example of a program that is displayed on the display 151. Referring to FIG. 10 (b), the broadcasting screen 400 may be displayed with a broadcasting channel block 401 and broadcasting widgets 410, 420, 430. The broadcasting channel block 401 is an opaquely displayed window on which broadcasting channel numbers, program names and the like may be displayed.

The broadcasting widget may include an instructor profile widget 410, a class schedule widget 420 and a related site widget 430. The widget is displayed on the display 151 according to the following two processes.

Using EPG information

The digital broadcasting may provide broadcasting related information such as EPG. The controller 180 may analyze the EPG information to select a widget appropriate for a currently broadcasted program, whereby web information related to the broadcasted program can be obtained. Thereafter, the widgets are also displayed when the broadcasting program is displayed, and when the widget is selected, updated web information for the widget can be acquired and displayed on the widget.

For example, in case of an education broadcasting program, the EPG information may include information such as an instructor name, class contents and a class schedule. The controller 180 may utilize the EPG information to connect with an external server to obtain web information. That is, the instructor name may be used to obtain the instructor's profile information. Furthermore, the class contents may be used to obtain a related class schedule. The obtained relevant web information can be displayed on each predetermined widget.

Downloading a widget program from a website

The controller 180 may use EPG information of digital broadcasting or broadcasting channel information to connect to a predetermined external server. Alternatively, the controller 180 may connect to a relevant site if there is a site preset by the user. The relevant site may be stored with a broadcasting widget program. The controller 180 downloads the broadcasting widget program from the relevant site, which is in turn set up in the broadcasting contents.

Thereafter, the broadcasting widget program is automatically executed when the broadcasting contents is displayed along with the broadcasting contents. The web information for the broadcasting widget program can be updated in real time.

For example, the relevant site may be a web page of a producer of the education program. The relevant site is stored with the instructor profile widget for each subject, a subject schedule widget and a relevant site widget. The controller 180 of the mobile terminal 100 may connect to the web page to download the widget program, and whenever the broadcasting program or a program similar to the broadcasting program is displayed, the widget program is displayed along with the broadcasting contents.

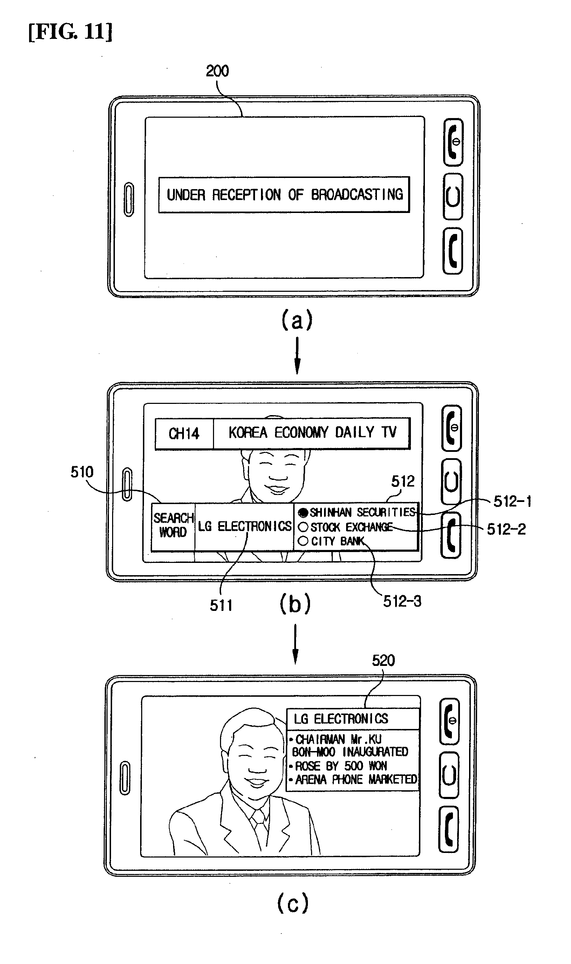

FIG. 11 (a) illustrates a broadcasting receiving screen 200. When a user input for selecting a broadcasting channel is received via the user input unit 130, the controller 180 activates the broadcasting receiving module 111 to display the broadcasting contents on the display 151. Then, the broadcasting contents and a search word widget 510 may be displayed on the display 151. The search word widget 510 may be a widget preset in the broadcasting contents.

The search word widget 510 may include a search word input window 511 and a search site selection window 512, as illustrated in FIG. 11 (b). The search site selection window 512 may be displayed with available search sites 512-1, 512-2, 512-3 related to the broadcasting contents. The user may select at least one of the search sites displayed on the search site selection window 512 via the user input unit 130.

For example, in the present embodiment, the broadcasting contents are related to economic news, thus, the search site may include a plurality of finance related sites. When the user selects at least one of the related sites and inputs a search word through the search word input window 511, the controller 180 displays the broadcasting contents on the display 151 and obtains web information according to the search result obtained from the selected search site, which is in turn displayed as a widget 520, as shown in FIG. 11 (c).

According to this embodiment, the user can easily select a search site related to the broadcasting contents and the information obtained from the search site is displayed with the broadcasting contents. Thus, the user can obtain more information while watching the broadcasting contents.

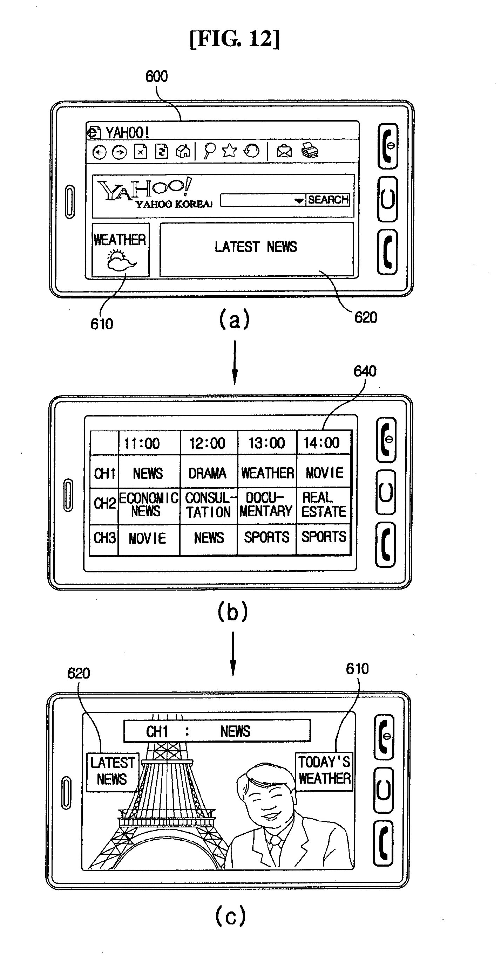

FIG. 12 (a) illustrates a broadcasting receiving screen 200. When a user input for selecting a broadcasting channel is received via the user input unit 130, the controller 180 activates the broadcasting receiving module 111 to connect to an external server and to display a web page screen 600 on the display 151.

The web page screen 600 has an area displaying information that is updated in real time, such as today's weather block 610, a latest news block 620 and the like, as illustrated in FIG. 12(a). The user may set up the areas 610, 620 as widgets related to the broadcasting contents. Alternatively, the user may set up other areas as widgets such that any number of web page areas may be set up as widgets.

When the user sets up a predetermined area as a broadcasting contents widget, a broadcasting schedule list 640 may be displayed on the display 151, as illustrated in FIG. 12 (b). The broadcasting schedule list 640 is intended to set up the webpage area for particular broadcasting contents. The broadcasting schedule list 640 may be generated using EPG data. The webpage information may be used during the generation of the broadcasting schedule list 640. For example, if the webpage relates to a finance related webpage, the controller 180 may extract a broadcasting program related to finance in the broadcasting information included in the EPG data, and display the broadcasting program as the broadcasting schedule list 640.

When the user selects at least one broadcasting program from the broadcasting schedule list 640, the areas 610, 620 designated in FIG.12 (a) may be set up as widgets related to the selected broadcasting program. Therefore, if the user selects the broadcasting program to display, the controller 180 may connect to an external server to download the webpage and display the setup areas 610, 620 as widgets along with the broadcasting program displayed on the display 150, as illustrated in FIG. 12 (c).

Alternatively, regardless of the broadcasting contents displayed, the widgets may be displayed according to a programmed time of the broadcasting program. Alternatively, if the user separately sets up a display time of the widgets using the webpage, the widgets may be displayed on the set display time regardless of whether the broadcasting program is displayed or not.

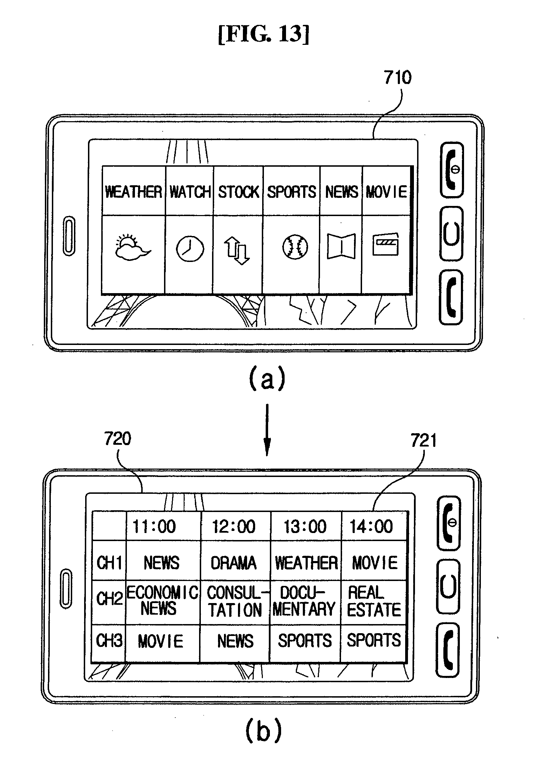

FIG. 13 (a) illustrates a widget table 710 pre-stored in the memory 160 of the mobile terminal 100. Various widgets are sorted out and displayed on the widget table 710 according to types thereof. The user may select widgets to be used as broadcasting widgets from the widget table 710.

Upon selection of widgets to be used as broadcasting widgets, the controller 180 may use the EPG information to display a schedule list 720 on the display 151, as illustrated in FIG. 13 (b). At this time, the schedule list 720 may not include all the program information in the EPG information but may be a schedule list displaying only the program catered for the type of the selected widget.

For example, when the user selects one program 721 displayed on the schedule list 720, the selected widget is set up in the selected broadcasting program. Accordingly, whenever the user watches the selected broadcasting program, a widget may be automatically displayed along with the broadcasting program. Alternatively, if the user selects a broadcasting channel, the selected widget may be set up in the broadcasting channel.

According to this embodiment, the user can conveniently set up a broadcasting widget on a broadcasting program or a broadcasting channel such that the user can obtain more information while viewing the broadcasting.

The broadcasting contents and widget information related thereto may be combined as widget macro data to be transmitted to other terminals through emails. Then, the broadcasting related widgets may be automatically displayed on the other terminals via the macro data when the broadcasting contents are displayed.

Although the above implementation has described cases where a widget related to the broadcasting is set up in the broadcasting program or broadcasting channel, the description is not limited thereto. The widget may be set up in a broadcasting genre. That is, the controller 180 may determine the broadcasting genre through the EPG information, whereby the user can set up the widget established per genre in the broadcasting program of the determined genre.

Furthermore, the broadcasting widget may be displayed in a broadcasting channel switch, an OOC (out of control) situation or an exceptional case involving audio or video teleconference, for example, when broadcasting cannot be displayed. That is, the broadcasting widget may be set up to be displayed in a particular situation other than the broadcasting program.

The above-described methods can be implemented in a program recorded medium as computer-readable codes. The computer-readable media may include all kinds of recording devices in which data readable by a computer system are stored. The computer-readable media include ROM, RAM, CD-ROM, magnetic tapes, floppy discs, optical data storage devices, and the like for example and also include carrier-wave type implementations (e.g., transmission via Internet). The computer may include the controller 180 of the mobile terminal.

Thus, it is intended that embodiments of the present disclosure may cover the modifications and variations of this disclosure provided they come within the scope of the appended claims and their equivalents.

Although embodiments have been described with reference to a number of illustrative embodiments thereof, it should be understood that numerous other modifications and embodiments can be devised by those skilled in the art that will fall within the scope of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method for displaying broadcasting content in a mobile terminal, the method **characterized by**:
Receiving a first input for selecting a channel which provides the broadcasting content on a display of the mobile terminal:
displaying the broadcasting content corresponding to the channel on the display:
if a widget related to the broadcasting content is not registered, displaying a message window prompting whether a widget is to be registered:
if a widget is to be registered, displaying a widget table (220), the widget table including several widgets from widgets pre-stored in the mobile terminal, the several widgets being related to the broadcasting content of the channel, the several widgets being selected by the mobile terminal from the prestored widgets using broadcasting channel information and/or broadcasting program related information:
receiving a second input for selecting at least one widget from the widget table on the display to be registered with the broadcasting content; and
displaying the broadcasting content on the display of the mobile terminal and displaying the at least one registered widget on a portion of the broadcasting content.

2. The method of claim 1. **characterized in that** the message window is overlaid on the broadcasting content.

3. A mobile terminal, **characterized by**:
a wireless communication unit (110) configured to receive a broadcasting content:
a display (151) configured to:
receive a first input for selecting a channel which provides a broadcasting content,
display the broadcasting content corresponding to the channel,
display a message window prompting whether a widget is to be registered, and
receive a second input for selecting at least one widget to be registered with the broadcasting content, from a widget table (220) including several widgets from widgets pre-stored in a memory of the mobile terminal, the several widgets being related to the broadcasting content of the channel, the several widgets being by the mobile terminal selected from the prestored widgets using broadcasting channel information and/or broadcasting program related information; and
a controller (180) configured to:
if a widget related to the broadcasting content is not registered, control the display to display a message window prompting whether a widget is to be registered,
if a widget is to be registered, control the display to display the widget table (220), and
control the display to display the broadcasting content and to display the at least one registered widget on a portion of the broadcasting content, in response to the second input.

4. The mobile terminal of claim 3. **characterized in that** the message window is overlaid on the broadcasting content.

## Patentansprüche

1. Verfahren zum Anzeigen von Rundfunkinhalt in einem mobilen Endgerät, wobei das Verfahren **gekennzeichnet ist durch**:
Empfangen einer ersten Eingabe zum Auswählen eines Kanals, der den Rundfunkinhalt auf einer Anzeige des mobilen Endgeräts bereitstellt;
Anzeigen des Rundfunkinhalts, der dem Kanal entspricht, auf der Anzeige;
wenn kein Widget in Bezug auf den Rundfunkinhalt registriert ist, Anzeigen eines Nachrichtenfensters, das abfragt, ob ein Widget registriert werden soll;
wenn ein Widget registriert werden soll, Anzeigen einer Widget-Tabelle (220), wobei die Widget-Tabelle mehrere Widgets aus Widgets umfasst, die in dem mobilen Endgerät vorgespeichert sind, wobei die mehreren Widgets sich auf den Rundfunkinhalt des Kanals beziehen, wobei die mehreren Widgets **durch** das mobile Endgerät unter Verwendung von Rundfunkkanalinformationen und/oder von Rundfunkprogramm-bezogenen Informationen aus den vorgespeicherten Widgets ausgewählt werden;
Empfangen einer zweiten Eingabe zum Auswählen wenigstens eines Widget aus der Widget-Tabelle auf der Anzeige, das mit dem Rundfunkinhalt registriert werden soll; und
Anzeigen des Rundfunkinhalts auf der Anzeige des mobilen Endgeräts und Anzeigen des wenigstens einen registrierten Widget auf einem Teil des Rundfunkinhalts.

2. Verfahren nach Anspruch 1, **dadurch gekennzeichnet, dass** das Nachrichtenfenster dem Rundfunkinhalt überlagert wird.

3. Mobiles Endgerät, **gekennzeichnet durch**:
eine drahtlose Kommunikationseinheit (110), die konfiguriert ist, um einen Rundfunkinhalt zu empfangen;
eine Anzeige (151), die konfiguriert ist, um:
eine erste Eingabe zum Auswählen eines Kanals, der einen Rundfunkinhalt bereitstellt, zu empfangen,
den Rundfunkinhalt, der dem Kanal entspricht, anzuzeigen,
ein Nachrichtenfenster, das abfragt, ob ein Widget registriert werden soll, anzuzeigen, und
eine zweite Eingabe zu empfangen, um wenigstens ein Widget, das mit dem Rundfunkinhalt registriert werden soll, aus einer Widget-Tabelle (220) auszuwählen, die mehrere Widgets aus Widgets umfasst, die in einem Speicher des mobilen Endgeräts vorgespeichert sind, wobei die mehreren Widgets sich auf den Rundfunkinhalt des Kanals beziehen, wobei die mehreren Widgets **durch** das mobile Endgerät unter Verwendung von Rundfunkkanalinformationen und/oder von Rundfunkprogramm-bezogenen Informationen aus den vorgespeicherten Widgets ausgewählt werden; und
eine Steuerung (180), die konfiguriert ist, um:
wenn kein auf den Rundfunkinhalt bezogenes Widget registriert ist, die Anzeige zu steuern, um ein Nachrichtenfenster anzuzeigen, das abfragt, ob ein Widget registriert werden soll,
wenn ein Widget registriert ist, die Anzeige zu steuern, um die Widget-Tabelle (220) anzuzeigen, und
die Anzeige zu steuern, um ansprechend auf die zweite Eingabe den Rundfunkinhalt anzuzeigen und das wenigstens eine registrierte Widget auf einem Teil des Rundfunkinhalts anzuzeigen.

4. Mobiles Endgerät nach Anspruch 3, **dadurch gekennzeichnet, dass** das Nachrichtenfenster dem Rundfunkinhalt überlagert wird.

## Revendications

1. Procédé d'affichage de contenu de diffusion dans un terminal mobile, le procédé étant **caractérisé par** :
la réception d'une première entrée pour sélectionner un canal qui fournit le contenu de diffusion sur un écran du terminal mobile ;
l'affichage du contenu de diffusion correspondant au canal sur l'écran ;
si un widget lié au contenu de diffusion n'est pas enregistré, l'affichage d'une fenêtre de message demandant si un widget doit être enregistré ;
si un widget doit être enregistré, l'affichage d'une table de widgets (220), la table de widgets comprenant plusieurs widgets parmi des widgets préalablement stockés dans le terminal mobile, les plusieurs widgets étant liés au contenu de diffusion du canal,
les plusieurs widgets étant sélectionnés par le terminal mobile parmi les widgets préalablement stockés en utilisant des informations de canal de diffusion et/ou des informations liées à un programme de diffusion ;
la réception d'une deuxième entrée pour sélectionner au moins un widget à partir de la table de widgets sur l'écran, à enregistrer avec le contenu de diffusion ; et
l'affichage du contenu de diffusion sur l'écran du terminal mobile et l'affichage de l'au moins un widget enregistré sur une portion du contenu de diffusion.

2. Procédé selon la revendication 1, **caractérisé en ce que** la fenêtre de message est superposée sur le contenu de diffusion.

3. Terminal mobile, **caractérisé par** :
une unité de communication sans fil (110) configurée pour recevoir un contenu de diffusion ;
un écran (151) configuré pour effectuer :
la réception d'une première entrée pour sélectionner un canal qui fournit un contenu de diffusion ;
l'affichage du contenu de diffusion correspondant au canal ;
l'affichage d'une fenêtre de message demandant si un widget doit être enregistré; et
la réception d'une deuxième entrée pour sélectionner au moins un widget à enregistrer avec le contenu de diffusion, à partir d'une table de widgets (220) comprenant plusieurs widgets parmi des widgets préalablement stockés dans une mémoire du terminal mobile, les plusieurs widgets étant liés au contenu de diffusion du canal, les plusieurs widgets étant sélectionnés par le terminal mobile parmi les widgets préalablement stockés en utilisant des informations de canal de diffusion et/ou des informations liées à un programme de diffusion ; et
un organe de commande (180) configuré pour effectuer :
si un widget lié au contenu de diffusion n'est pas enregistré, la commande à l'écran d'afficher une fenêtre de message demandant si un widget doit être enregistré ;
si un widget doit être enregistré, la commande à l'écran d'afficher la table de widgets (220), et
la commande à l'écran d'afficher le contenu de diffusion et d'afficher l'au moins un widget enregistré sur une portion du contenu de diffusion, en réponse à la deuxième entrée.

4. Terminal mobile selon la revendication 3, **caractérisé en ce que** la fenêtre de message est superposée sur le contenu de diffusion.
